# DEMANDE DE BREVET EUROPEEN

(11) **EP 2 251 502 A2**
(43) Date de publication de la demande: **17.11.2010**
(21) Numéro de dépôt: 10162684.4
(22) Date de dépôt: 12.05.2010
(51) Int. Cl.: E04F 15/12, E04F 15/20, E04B 1/80

(54) **Plancher isolant ameliore**

(30) Priorité: 12.05.2009 FR 0953132
(71) Demandeur: Electricité de France, 75008 Paris (FR)
(72) Inventeur: Milleville, Pierre-Henri, 77670, VERNOU LA CELLE SUR SEINE (FR); Duforestel, Thierry, 77250, MORET SUR LOING (FR); Amy de la Breteque, Emmanuel, 77210, AVON (FR); Yrieix, Bernard, 77250, MORET SUR LOING (FR); Coevoet, Michel, 77810, Thomery (FR)
(74) Mandataire: Texier, Christian

(57) **Abrégé**

Plancher isolant comprenant d au dessus de la structure porteuse :
- une chape (34) humide à haute performance,
- une couche isolante (32) agencée sous la chape de béton (34) et comprenant des panneaux sous vide,

caractérisé en ce que la couche isolante comprend une couche de protection mécanique, isolante à l'humidité (322).

Alternativement, la chape humide peut être de type sec.

## Description

L'invention se situe dans le domaine des planchers isolants avec éventuellement une fonction de transfert thermique (dans le cas de planchers chauffants par exemple).

Plus particulièrement, l'invention se situe dans le domaine des planchers comprenant des chapes et dalles dites « flottantes », par exemple à base de liant hydraulique, et des sous-couches isolantes constituant les planchers isolants.

Plus particulièrement encore, l'invention se situe dans le domaine de la rénovation, par exemple de bâtiments, nécessitant une isolation thermique et éventuellement acoustique des planchers existants.

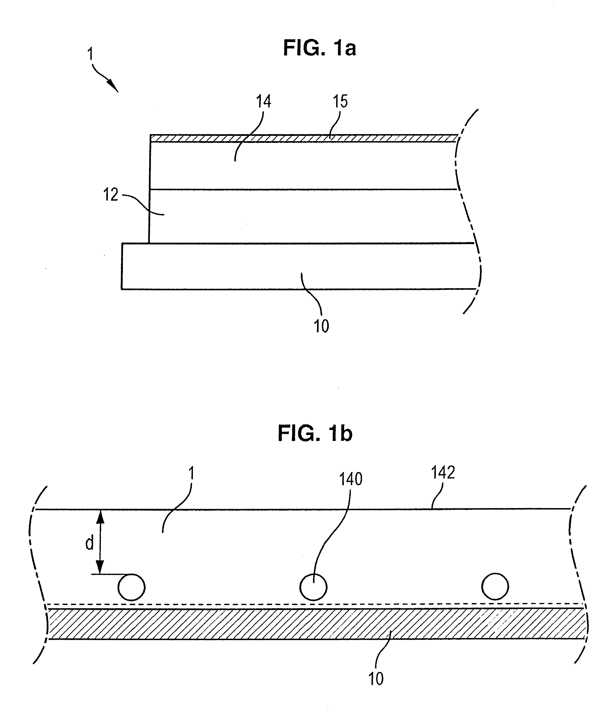

En référence à la figure 1a, un plancher 1 selon l'état de la technique est un ouvrage destiné à compléter le gros oeuvre (dalle structurelle 10) sur lequel il repose soit directement, soit avec interposition d'une couche intermédiaire de désolidarisation ou d'isolation. Une telle structure est destinée soit à rester brute, soit à être recouverte d'un revêtement suivant l'utilisation du sol (carrelage, moquette, parquet, linoléum, ...).

Un plancher isolé thermiquement selon l'état de la technique est agencé sur une structure support porteuse 10, appelée également « dalle structurelle », et comprend généralement :
- une sous-couche fonctionnelle 12 dont le but est d'apporter un effet fonctionnel au plancher, comme une isolation thermique et/ou acoustique avec éventuellement une fonction de transfert thermique dudit plancher,
- une chape supérieure 14, appelée également « dalle flottante », destinée à rester brute ou à recevoir un revêtement 15 du plancher. Cette chape n'a pas de fonction structurelle comme le plancher et permet d'assurer d'une part la transmission mécanique support des charges permanentes et d'utilisation, et d'autre part la planéité et le nivellement du plancher. Cette chape est généralement mais non exclusivement en mortier (parfois aussi qualifié de " béton").

Dans le domaine de la construction et/ou de la rénovation, il existe des règles de l'art et de conception de la construction. Ces documents définissent les conditions d'exécution des ouvrages justiciables des règles de conception et de calcul aux états limites (BAEL pour « Béton Armé aux États Limites ») ou de normes NF-DTU (Documents Techniques Unifiés ) qui constituent des cahiers de clauses techniques standardisées applicables à des travaux de bâtiment. Le BAEL est le règlement français concernant l'utilisation du béton armé dans la construction.

De plus, la notion d'isolation desdits planchers isolants est parfaitement encadrée par des instituions (comme les états) qui imposent dans leurs réglementations thermiques pour la construction neuve ou pour l'existant des valeurs ou plages de valeurs de résistance thermique (exprimée en m²K/W) pour la sous couche isolante ou de déperdition surfacique globale (exprimée en W/m²K) pour le plancher isolant.

Ces valeurs conduisent donc à la mise en place de sous-couches isolantes qui, compte tenu de la performance de conductivité thermique (λ) exprimées en W/mK de ces matériaux isolants induits donc des épaisseurs de sous-couche données.

Pour garantir le respect des règles de l'art en termes de mise en oeuvre, en France, les DTU se réfèrent à des normes harmonisées, des produits ou des procédés de construction, dont l'aptitude à satisfaire aux dispositions techniques est reconnue par l'expérience.

Un DTU peut se composer des documents suivants :
- Le cahier des clauses techniques (CCT) qui définit les conditions à respecter dans le choix et la mise en oeuvre des matériaux ;
- Le cahier des clauses spéciales (CCS) qui accompagne le CCT et définit les limites des prestations et obligations envers les autres corps de métier;
- Les règles de calcul pour le dimensionnement des ouvrages.

Ces normes permettent notamment de garantir les caractéristiques des constructions en terme mécanique, thermique, de mise à niveau, de profil (forme de pente éventuelle) ou de l'état de surface compatible avec les revêtements qui les complètent dans les limites de leurs tolérances admissibles, de la transmission au support des charges permanentes et d'utilisation, compte tenu de la couche intermédiaire éventuelle et d'isolation acoustique des locaux concernés.

Ainsi, dans le cas des planchers et des réalisations de chape ou dalles flottantes sur sous couche isolante (par exemple conformément à la norme NF P 61-203 et du DTU), ces règles définissent les cotations à respecter, les matériaux à utiliser, comme l'exemple ci-dessous issu de la norme homologuée NF DTU 26.2 P1-2,

**extrait de la norme homologuée NF DTU 26.2 P1-2**

| **Classe de l'isolant** | **CHAPE ou DALLE** | |
|---|---|---|
| | **Épaisseur** | **Treillis soudé/fibres** |
| SC1 | Épaisseur nominale ≥ 5 cm sans être localement inférieure à 4 cm | - soit treillis soudé de mailles maximales 100 mm × 100 mm et de masse minimale de 325 g/m² |
| | | - solt fibres bénéficiant d'un Avis Technique¹⁾ tavorable pour cet usage |
| | Épaisseur nominals ≥ 6 cm sans être localement Inférieure à 4,5 cm | Non nécessaire |
| SC2 | Épaisssur nominale ≥ 6 cm sans être localement intérieure à 4.5 cm | - soit treillis soudé de mailles maximales 100 mm x 100 mm et de masse minimale de 325 g/m² |
| | | - soit fibres bénéficiant d'un Avis Technique favorable pour cet usage |
| *1) Ou son équivalent dans les conditions indiquées dans l'avant-propos.* | | |

La norme NF DTU 26.2 P1-2 stipule que les planchers doivent avoir une épaisseur minimale de 40mm afin de pouvoir respecter certaines caractéristiques mécaniques des planchers.

Dans la suite du document, on entend par « plancher isolant à fluide », tout plancher chauffant à eau ainsi qu'à d'autres fluides caloporteurs permettant d'apporter une fonction thermique de chauffage ou de refroidissement selon les systèmes thermodynamiques utilisés pour alimenter ledit plancher (comme des pompes à chaleur).

Dans le cas de planchers isolants à fluide, et en référence à la figure 1b répondant aux exigences de la norme homologuées : NF DTU 65.14 P2 «Exécution des planchers chauffants à eau chaude », la distance « d » entre les tuyaux 140 permettant de faire circuler le fluide pour l'effet thermique du plancher 1 situé sur la structure porteuse 10 et la surface 142 du plancher 1 doit être d'au moins 40mm.

Ainsi la mise en oeuvre d'un plancher isolant est encadrée par une notion d'épaisseur totale (notamment en fonction de l'épaisseur de la chape) pour assurer des caractéristiques mécaniques et thermiques réglementées associées à la sous couche isolante.

Cependant il est possible de déroger aux règles précédemment définies à l'aide d'un Avis Technique (AT) ou Document Technique d'Application (DTA) ou encore d'un Agrément Technique Européen (ETA) permettant pour un produit nouvellement mis sur le marché et plus généralement non standard d'établir une exception aux règles à la condition qu'un tel produit puisse effectivement présenter les mêmes caractéristiques mécaniques et thermiques sans pour autant obéir auxdites règles. Ainsi, il existe des AT pour certaines chapes de béton permettant de déroger à la règle citée précédemment et d'obtenir des épaisseurs allant de 20 à 30 mm au dessus de la sous-couche isolante tout en respectant les mêmes contraintes mécaniques et thermiques imposées.

Or, on connaît dans ce domaine des chapes humides, fluides et coulées sur place, en mortier de ciment ou anhydrite. Certaines de ces chapes sont dites « minces » ou à « haute performance » et présentent des caractéristiques mécaniques telles qu'elles permettent leur utilisation en faible épaisseur.

Notamment on connaît une telle chape ultra mince de béton objet du document WO 00/66512, ladite chape comprenant :
- une matrice comprenant, entre autres, un liant organique et/ou éventuellement hydraulique et de l'eau ;
- une charge constituée de matériaux, tels que du sable de granulométrie déterminée ;
- le volume de la matrice est suffisant pour que le mélange de l'ensemble obtienne un résultat supérieur ou égal à 18 cm au test du Flowtest (selon la norme NF EN 12350-5) sans secousses ;
- la granulométrie de la charge est définie par un diamètre supérieur des grains pouvant être compris entre 0,4 et 5 mm ;
- le rapport eau/liant est compris entre 0,2 et 0,4 ; et
- la proportion de liant hydraulique dans le produit fini est comprise entre 250 et 500 kg/m³ ; et en ce qu'il comprend :
   - un réducteur d'eau constitué d'au moins un défloculant couplé ou non avec un viscosant ; et
   - des ajouts.

A titre illustratif, on peut citer la chape mince Vicat ®, faisant l'objet de l'avis technique 12/05/1430 et dont les caractéristiques sont les suivantes :

| | |
|---|---|
| **Densité sur mortier durci** | 2 à 2,3 |
| **Résistance en compression** | 35 MPa à 28 jours |
| **Résistance en flexion** | 7 MPa à 28 jours |
| **Retrait (7x7x28cm, 20Â°C/50 % HR)** | 150 µm/m à 28 jours |
| **Conductivité thermique** | = 2,5 W/m.K |
| **Séchage (humidité à 20 mm)** | Hr < 5 % après 7 jours, Hr < 2,5 % à 28 |
| **Fractionnement** | Cf Avis technique 12/05-1430 |
| **Epaisseur de chape** | Minimum 2 cm maximum 8 cm |

Le mortier de la chape mince Vicat ® comprend au moins les éléments suivants :
- ciment au calcaire par exemple de type CEM II A 42,5 R (L),
- filler calcaire ou cendres volantes,
- sables de granulométrie maximale 0/6.3 mm,
- additif par exemple de type TOPCEM MINCE,
- stabilisateur,
- superplastifiant (par exemple selon EN 934-2),
- fibres par exemple en polypropylène préférentiellement de longueur allant d'environ 6 mm à environ 9 mm.

Alternativement, ces chapes humides peuvent être à base de sulfate de calcium (anhydrite) comme les chapes fluoro-anhydrite de caractéristiques semblables pour une épaisseur de 20 à 35 mm (voir par exemple le document FR 2 659 078). On citera à cet effet le produit « chape ANHYCHAPE FLUIDE » et son avis technique N° 2/07-1498.

De telles chapes de béton (ou mortier), beaucoup plus performantes que les chapes traditionnelles autorisent une épaisseur de mise en oeuvre inférieure permettant de s'affranchir de treillis de renfort mécanique, tout en maintenant des caractéristiques mécaniques et physiques équivalentes à des chapes traditionnelles, de plus grâce à des adjuvants spécifiques, elles disposent de propriétés autolissante et autoplaçante (ou autonivelante) simplifiant grandement sa mise en oeuvre pour un plancher.

Par la suite, on entendra par le terme générique, « chape humide à haute performance », par analogie à la notion de béton à haute performance (BHP) ou béton à ultra haute performance (BUHP) ou encore béton fibré à ultra haute performance (BFUHP), une chape fluide (autonivelante et autolissante) de béton ou de mortier, à base de ciment ou d'anhydrite, préférentiellement fibrée et dont les caractéristiques mécaniques sont telles qu'elles conduisent à des épaisseurs coulées comprises entre 20 et 40 mm (substantiellement moindres que les épaisseurs des chapes traditionnelles de béton de ciment) et permettent ainsi de pouvoir déroger aux règles d'épaisseur précitées tout en respectant les contraintes mécaniques et thermiques liées à ces règles de construction.

Ces chapes humides à hautes performances ont les caractéristiques mécaniques établies après séchage (environ 28 jours de séchage) suivantes (selon la norme NF EN 13-813):
- résistance à la compression supérieure à 30 MPa,
- résistance à la flexion supérieure à 6 MPa.

En comparaison, le DTU 26.2 pour les chapes traditionnelles en béton avec treillis de renfort pour les planchers de locaux de faible sollicitation imposent les valeurs minimales de 16 MPa pour la résistance à la compression et de 3 MPa pour la résistance à la flexion.

On connaît également des chapes dites « sèches » qui présentent également de hautes caractéristiques mécaniques et une faible épaisseur. Elles sont appelées « chapes sèches flottantes » et sont constituées essentiellement de plaques de plâtre cartonnées préfabriquées comme décrit dans le document EP 1 801 085. On citera notamment la chape sèche flottante PREGYCHAPE sous avis technique N° 12/04-1409a.

Les chapes de béton sont généralement utilisées dans le domaine de la construction et de la rénovation au sein d'un plancher isolant. Outre leurs performances mécaniques, les planchers isolants doivent présenter des propriétés thermiques spécifiques. En effet, l'efficacité énergétique des bâtiments existants est au centre des politiques énergétiques de pays visant aux objectifs de réduction des gaz à effet de serre selon les accords de KYOTO. Par exemple, en Europe, les consommations de chauffage sont à l'origine de 46 % des émissions de CO2. De ce fait, la volonté d'isoler les parois des bâtiments existant qui ne l'était pas devient une priorité. Ainsi une nouvelle Réglementation Thermique pour l'existant a été imposée en 2007 en fixant des seuils minimums de performance d'isolation pour les parois avec par exemple une résistance thermique minimale de 2 m²K/W.

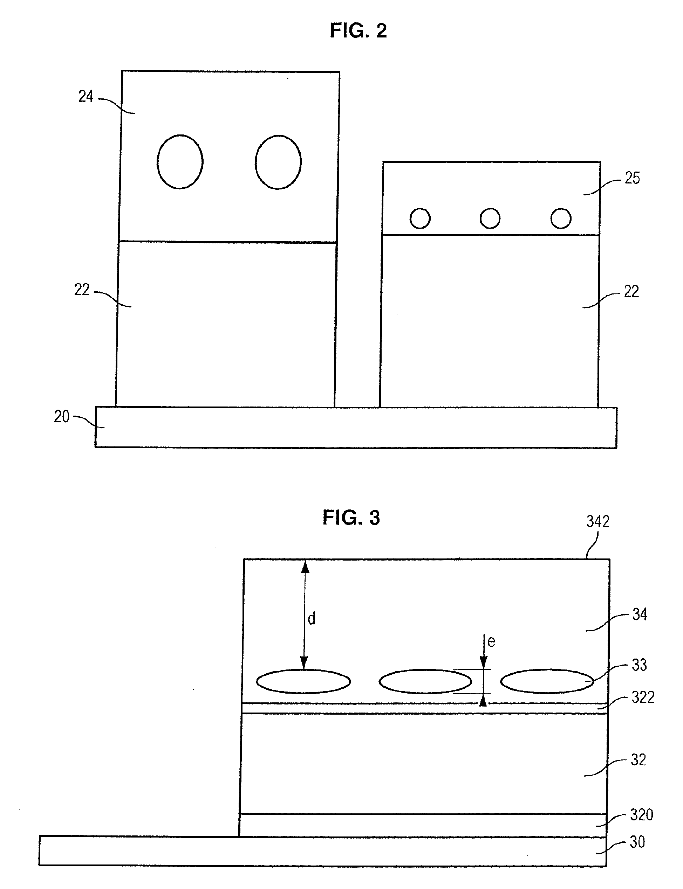

En conséquence, dans le cas d'une rénovation lourde, c'est-à-dire des travaux sans occupant ou le plancher existant est détruit jusqu'à la structure porteuse et sur laquelle on vient réaliser une isolation et une chape puis un revêtement, la personne responsable de la rénovation se retrouve rapidement limitée à deux choix (référence est faite à la figure 2) :
- Isoler le plancher en utilisant au-dessus de la structure porteuse 20 une couche isolante 22 en plastique alvéolaire, par exemple en polyuréthane (PUR) d'environ 50 mm afin de garantir une isolation du sol suffisante (par exemple une isolation supérieure à 2m²K/W), cette couche étant située sous une chape traditionnelle de béton 24 d'épaisseur 60 mm ou plus. Cependant cette solution a l'inconvénient de présenter une épaisseur totale d'environ 110 mm ce qui est difficilement envisageable dans le cadre d'une rénovation en ce que la hauteur sous plafond et les éléments dépendant de la hauteur sous plafond tels que les portes et les diverses alimentations en fluide s'en trouvent modifiés. Même en utilisant une chape humide à haute performance 25 avec une épaisseur moyenne d'environ 30 mm, la hauteur totale au dessus de la structure porteuse 20 est d'environ 80 mm, ce qui présente encore des difficultés dans le cadre d'une rénovation.
- Plus généralement la personne responsable de la rénovation est tentée d'effectuer l'isolation par-dessous la structure porteuse pour éviter les contraintes liées à l'épaisseur du plancher, ce qui d'une part n'est pas toujours possible et d'autre part présente l'inconvénient d'une rénovation sensiblement alourdie. Une telle rénovation ne peut pas être toujours réalisée sur toute la surface en sous face du plancher à cause d'éléments présents (poutre, refend, canalisation,..). La rénovation est en conséquence sensiblement complexifiée et son efficacité amoindrie.

Un but de la présente invention est donc de proposer une structure de plancher isolant éventuellement à chape fluide et un procédé de rénovation des planchers en vue de leur isolation qui soient améliorés par rapport à l'état de la technique.

Plus précisément, un but de la présente invention est de fournir une structure de plancher isolant permettant d'offrir une épaisseur sur structure porteuse moindre par rapport à l'état de la technique.

A cet effet, il est prévu un plancher isolant selon la revendication 1 annexée.

Une telle structure de plancher isolé thermiquement permet la réalisation d'une combinaison d'une chape humide à haute performance et d'un isolant sous vide et ainsi d'atteindre des épaisseurs moindres que celles proposées par l'état de la technique ; il devient donc possible de proposer une isolation d'un plancher existant par le dessus de la structure porteuse, par exemple dans le cadre d'une rénovation tout en proposant des épaisseurs moindres que celles de l'état de la technique.

Cette invention répond ainsi à la problématique d'isolation des planchers qui, sur des bâtiments existants par exemple de type ancien, sont une des parois les plus complexes à isoler.

Avantageusement mais facultativement, l'invention comprend au moins l'une des caractéristiques suivantes :
- les panneaux sous vide sont de type standard,
- les panneaux sous vide comprennent une âme en silice microporeuse et une enveloppe barrière permettant de maintenir une dépression à l'intérieur de l'enveloppe,
- la couche de protection mécanique, isolante à l'humidité comprend en outre des moyens résilients de protection associés à la couche isolante afin de protéger ladite couche isolante,
- le plancher comprend en outre des moyens d'isolation acoustique associés à la couche isolante,
- la chape comprend une couche de transfert thermique,
- la couche thermique comprend un plancher rayonnant électrique,
- la couche thermique comprend des moyens de circulation d'un fluide caloporteur,
- les moyens de circulation comprennent des tuyaux d'une épaisseur d'environ 5mm,
- la chape est une chape à haute performance de type sèche.

L'invention concerne également un ensemble d'isolation d'une pièce comprenant :
- un plancher isolant selon l'invention,
- un système thermodynamique relié aux moyens de circulation.

L'invention concerne également un procédé de mise en oeuvre d'un plancher isolant comprenant les étapes suivantes :
- fournir une couche isolante comprenant des panneaux sous vide,
- disposer ladite couche isolante sur une structure porteuse,
- disposer une couche de protection mécanique, isolante à l'humidité sur ladite couche isolante,
- disposer par coulage une chape humide à haute performance sur la couche de protection mécanique, isolante à l'humidité sur ladite couche isolante.

Avantageusement mais facultativement, le procédé comprend l'étape suivante:
- fournir en outre une couche de transfert thermique disposée sur ladite couche isolante.

D'autres caractéristiques, buts et avantages de la présente invention apparaîtront à la lecture de la description détaillée qui va suivre, au regard des dessins annexés, donnés à titre d'exemples non limitatifs et sur lesquels :
- la figure 1a est un schéma simplifié d'un plancher isolant selon l'état de la technique,
- la figure 1b est un schéma extrait de la norme NF DTU 65.14 P2 et présentant un schéma simplifié d'un plancher isolant selon l'état de la technique,
- la figure 2 est un schéma simplifié de deux structures de plancher isolant selon l'état de la technique,
- la figure 3 est un schéma simplifié d'une structure de plancher isolant selon une réalisation possible de la présente invention,
- la figure 4 est un schéma simplifié d'une structure de panneaux sous vide d'un plancher isolant selon une réalisation possible de la présente invention,
- la figure 5 est un graphe fonctionnel d'un procédé de mise en oeuvre d'un plancher isolant selon l'invention.

Le plancher isolant selon l'invention comprend donc une couche isolante comprenant des Panneaux Isolants sous Vide (appelés par la suite « PIV», appelés également «VIP» ou « Vacuum Insulation Panel » en anglais). Ces PIV sont des panneaux composites fréquemment constitués d'une âme essentiellement à base de silice microporeuse, « encapsulée » à basse pression grâce à un « complexe ou film barrière » souvent multicouche et thermo-soudé permettant de préserver cette dépression à l'intérieur du panneau. Ils seront qualifiés de « standards » lorsqu'ils sont uniquement constitués de leur enveloppe barrière en regard de systèmes plus complexes tels que décrits par exemple dans les brevets EP 1 566 264 de SCHWENK ou DE 20 2004 010695 de POREXTHERM et DE 10 2008 003400 de VAQTEC qui disposent de moyens de protection mécanique ou d'assemblage associés et qui s'apparentent alors plus à des complexes isolants avec des PIV qu'à de simples panneaux isolants sous vide comme revendiqué dans l'invention.

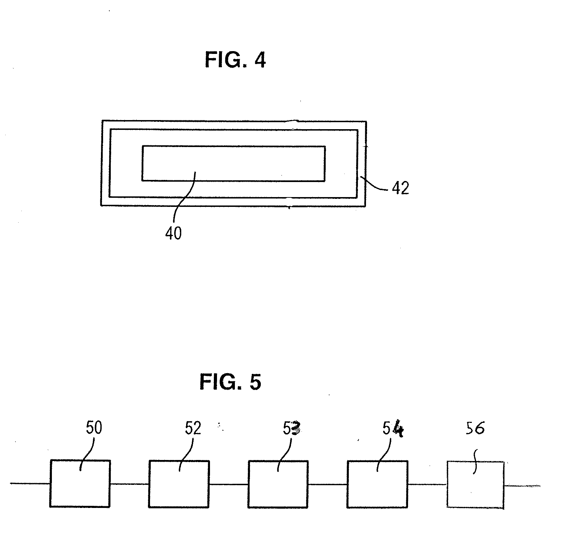

En référence à la figure 4, un PIV comprend les éléments suivants :
- une âme sous vide 40 constituée essentiellement de silice microporeuse,
- une enveloppe barrière 42 constituée d'un film multicouche themosoudable d'une épaisseur de l'ordre de 0.1 mm permettant de maintenir la dépression à l'intérieur de l'enveloppe,

L'âme 40 est préférentiellement constituée de silice microporeuse compactée de masse volumique de l'ordre de 200 kg/m³. Une telle âme présente à pression atmosphérique une conductivité thermique inférieure à 0,020 W/m.K, nettement inférieure à celle de tous les isolants usuels.

Les PIV présentent un double intérêt :
➢ D'une part ils présentent des coefficients de conductivité thermique considérablement réduits de l'ordre de 0,005 W/m.K, comparé à des les isolants traditionnels, même très performants (environ 0,029 W/m.K) pour des niveaux de pression de quelques millibars et ils conservent une conductivité inférieure à 0,010 W/m.K jusqu'à une pression de 0,1 bar. Cette très large tolérance de la caractéristique isolante vis-à-vis de la remontée de pression interne est un avantage essentiel des PIV à base de silice microporeuse pour assurer la conservation dans le temps de leur caractère isolant.
➢ D'autre part les panneaux obtenus se présentent alors comme des produits semi-rigides, qui peuvent être facilement intégrés à des composants traditionnels comme dans la présente invention.

Les avantages d'utiliser des panneaux sous vide en plancher sont les suivants :
- Leur performance en termes de conductivité thermique est très élevée et jamais atteinte par les matériaux traditionnels d'isolation dans le domaine du bâtiment. Les panneaux sous vide permettent ainsi d'offrir une résistance thermique élevée garante d'une bonne isolation thermique du plancher pour des épaisseurs très faibles (généralement de 10 à 20 mm).
- Leur forme et leur rigidité sont parfaitement compatibles avec une isolation sous chape.
- Leur durée de vie, si l'intégrité du film barrière qui les constitue est préservée est compatible avec la durée d'utilisation dans les bâtiments de l'ordre de 50 ans.

Toutefois les PIV standards tels que décrits présentent les problématiques suivantes :
- Ils présentent une extrême fragilité mécanique de leur film barrière enveloppe lors de la mise en oeuvre. En effet, en cas de percement de l'enveloppe barrière 42, le PIV passe d'une conductivité de 0.005 W/mK à 0.020 W/mK réduisant brutalement leur résistance thermique. Il est à noter que cette valeur accidentelle reste néanmoins meilleure que celle du polyuréthanne (0,029 W/m.K) isolant le plus performant utilisé en matériau d'isolant sous chape en plancher. De plus ce type de couche isolante sous vide a une médiocre performance acoustique (par une conduction solidienne élevée),
- Ils présentent une sensibilité à l'eau liquide et à la vapeur d'eau du fait des phénomènes de transfert à travers l'enveloppe barrière. Cette sensibilité est augmentée dans les conditions de forte humidité, et de température élevée (soit entre 25 et 50 °C). Cette sensibilité se traduit par une forte réduction de leur résistance thermique qui peut être en conséquence fortement réduite. Il en résulte également une diminution de leur durée de vie.

Or les humidités et températures élevées sont malheureusement courantes pour une application en plancher isolant pour bâtiment. En effet, que ce soit par le nettoyage, par accident et même l'ambiance générale du logement, le PIV se trouve continuellement exposé à des humidités importantes. De plus, cette situation peut être accentuée lorsque le plancher est chauffant et/ou rafraîchissant par les conditions de cyclage de température affectant le plancher. Enfin, une chape humide apporte, lors de la mise en oeuvre, une grande quantité d'eau, et donc de vapeur d'eau tandis qu'une chape sèche offre une étanchéité quasi-nulle à l'eau liquide, et à la vapeur d'eau.

Ainsi, quel que soit leur type, ces chapes à haute performance ne constituent pas des barrières étanches à la vapeur d'eau pour limiter les sollicitations de l'enveloppe barrière des PIV. Sans autres précautions, c'est l'enveloppe barrière du PIV qui sera, seule, garante de la durée de vie et de la performance thermique dans le temps du système.

On définit le facteur de résistance à la diffusion de la vapeur d'eau (noté µ) (comme décrit par exemple dans le fascicule N° 2/5 de la réglementation thermique Française RT 2000 et la norme NF EN 12524 et EN ISO 93 46) comme étant le rapport sans unité entre la perméabilité de l'air - égale à 1,9.10⁻¹⁰ kg/(m.s.Pa) - sur celle du matériau considéré.

On définit également la résistance à la diffusion de la vapeur d'eau (pouvant être notée « Rd » et exprimée en m².s.Pa/kg) comme la capacité d'un matériau à être traversé par de la vapeur d'eau.

On définit enfin la perméance, pouvant être notée « P » et exprimée en kg/(m². s.Pa) comme la quantité de vapeur d'eau traversant une surface de paroi par unité de temps sous une différence de pression donnée.

Ainsi, pour un isolant sous vide qui par principe crée, de part et d'autre de son enveloppe barrière, une différence de pression, on parle plus volontiers de perméance à la vapeur d'eau de l'enveloppe barrière en regard de la durabilité de la performance thermique du panneau sous vide.

Alors que pour un matériau donné, on parle plus volontiers soit de sa perméabilité à la vapeur d'eau soit de son facteur de résistance à la diffusion de la vapeur d'eau µ. Une chape béton a un facteur de résistance à la vapeur d'eau µ de l'ordre de 20 à 100 alors qu'une chape anhydrite à communément un facteur µ de l'ordre de 10. Par exemple la chape mince breveté VICAT ® a un taux d'humidité supérieur à 2.5 % à 28 jours pour un facteur de résistance à la diffusion de la vapeur d'eau µ de l'ordre de 20 à 100.

Une autre problématique des PIV est, comme évoqué, sa fragilité mécanique. En effet, en cas de percement de la couche barrière, le panneau sous vide perd une part importante de sa fonction isolante.

Cette fragilité des panneaux sous vide standards, c'est-à-dire non intégrés dans des complexes, pose des problèmes lors de l'installation. En effet, une fois la couche isolante constituée de panneaux sous vide posée sur la couche porteuse, il faut pouvoir circuler dessus pour couler la chape de mortier ou installer la chape sèche. Or la fragilité de l'enveloppe des PIV (d'environ 100 µm d'épaisseur) nécessite une précaution de protection pour ne pas la percer ou l'endommager. Une telle précaution n'est pas compatible avec les habitudes du domaine de bâtiment.

Pour ces raisons, les panneaux sous vide sont très rarement utilisés dans l'isolation des planchers.

De manière surprenante, les inventeurs ont découvert que l'utilisation d'une simple couche d'interface entre la chape et le PIV permettait de surpasser les difficultés précédentes et d'offrir une combinaison entre une chape mince et une couche isolante composée de PIV. Cette couche d'interface assure outre une couche de protection mécanique, l'étanchéité à la vapeur d'eau et à l'eau liquide pour préserver la durée de vie des PIV standards et peut également assurer si besoin le support de systèmes de chauffage ou de refroidissement. De plus, une telle couche offre une couche supplémentaire de protection acoustique.

En référence à la figure 3, et selon une réalisation possible de la présente invention, un plancher comprend :
- une structure porteuse 30 ; une telle structure est connue de l'état de la technique et ne sera pas plus détaillée par la suite,
- une couche isolante 32 renforcée. Cette couche isolante comprend des éléments de type panneaux sous vides (appelés « PIV ») qui seront décrits plus en détail par la suite. Une telle couche est avantageusement d'une épaisseur allant de 10mm à 30mm et préférentiellement d'environ 20mm. Cette couche isolante est avantageusement renforcée afin d'assurer la protection des panneaux sous vide et d'assurer une bonne l'isolation acoustique. La couche isolante est renforcée par une couche résiliente de protection 322, étanche à l'eau liquide, de forte résistance à la diffusion de vapeur d'eau, et mécaniquement protectrice, d'une épaisseur environ 2 mm située entre les panneaux sous vide et la chape humide à haute performance. Avantageusement, il peut être prévu une couche d'isolation acoustique 320 (préférentiellement d'une épaisseur environ 3 mm) entre les panneaux sous vide et la structure porteuse 30. Préférentiellement, la couche de protection mécanique, isolante à l'humidité 322 est dans au moins l'une des matières suivantes : thermoplastique, thermodurcissant, élastomère, ou une combinaison de plusieurs couches avec éventuellement des couches barrières minérale ou métallique. La matière de la couche de protection mécanique, isolante à l'humidité doit avoir un facteur de résistance à la vapeur d'eau µ de l'ordre de 50 000 à 500 000.
- Une chape humide à haute performance 34, cette chape étant fluide autonivelante et autolissante, à base de mortier de ciment ou d'anhydrite, préférentiellement fibrée comme décrit précédemment. Cette chape est préférentiellement d'une épaisseur allant de 20 mm à 40 mm et préférentiellement d'une épaisseur de 25 mm. Avantageusement mais non exclusivement, cette chape peut correspondre à la chape de béton selon l'Avis Technique n°12/05-1430. Alternativement, cette chape de béton peut être de structure différente permettant d'obtenir des performances mécaniques et thermiques acceptables sans pour autant offrir une épaisseur excessive, préférentiellement sans dépasser une épaisseur de 30mm.

Ainsi, cette couche de protection mécanique, isolante à l'humidité a une double fonction :
- D'une part, elle permet la protection mécanique des PIV afin d'éviter tout percement de la couche barrière. Cette couche permet de protéger mécaniquement les PIV standards lors de la mise en oeuvre de la chape. En effet, avec une telle couche, on peut circuler dessus sans problème pour les besoins de la mise en oeuvre de la chape.
- D'autre part, elle permet d'isoler de l'humidité les PIV afin de prolonger leur durée de vie. Elle protège les PIV standards de l'eau liquide et plus généralement (pour les chapes sèches ou humides) elle permet de protéger les PIV de toute humidité durant la vie du plancher. Ainsi, elle limite la sollicitation à la vapeur d'eau de l'enveloppe barrière de ces PIV standards afin de garantir une meilleure durée de vie.

La combinaison d'une chape humide à haute performance, mince et d'un isolant sous vide (combinaison rendue possible par la présente invention) permet d'obtenir des épaisseurs de plancher considérablement moindres de l'ordre de 40 à 60 mm par rapport à l'état de la technique tout en garantissant les mêmes performances mécaniques et thermiques par exemple une résistance thermique supérieure à 2 m²K/W.

De plus, la structure de plancher selon l'invention permet donc l'utilisation de PIV « standards » sans le surcoût généré par des structures sandwich complexes destinées à protéger des risques de percement.

Enfin, ladite couche présente l'avantage de permettre d'intégrer aisément le support de tout système de transfert thermique de chauffage ou de refroidissement que l'on souhaiterait implanter dans le plancher lors de l'opération d'isolation de celui-ci.

La nature telle que décrite de la dite couche permet en outre d'envisager sans que cela soit exhaustif une forme façonnable à la demande par exemple en rouleau pouvant être déroulée sur les PIV assemblés avant la mise en place de la chape.

Pour une surface de plancher donnée, le pavage de ladite surface par les PIV peut être réalisable de trois façons :
- totalement sur mesure, les dimensions des PIV étant alors adaptées au besoin,
- partiellement sur mesure, en utilisant essentiellement des panneaux de dimensions standards complétés par quelques panneaux sur mesure,
- uniquement par des PIV de dimensions standards, complétés par des plaques de polystyrène extrudé (PSX) ou polyuréthane (PUR), découpées sur place lors de l'installation des PIV.

Les deux premières solutions sont préférentiellement adaptées à la pose d'un plancher thermique (chauffant), la dernière préférentiellement à un simple plancher isolant.

Les dimensions « standards » suggérées sont 1600*1200, 1200*800, 800*600 et 600*400.

L'épaisseur de l'âme est adaptée en fonction de la résistance thermique désirée en fin de vie.

Avantageusement, un plancher selon l'invention comprend également une couche avec fonction de transfert thermique. Cette fonction peut être soit de type chauffant, soit de type refroidissant, soit les deux. Concernant cette partie thermique, les planchers ont, selon l'état de l'art de la technique des structures selon la figure 1b décrite précédemment.

A cet effet, la couche de protection mécanique, isolante à l'humidité 322 permet également avantageusement le support d'un système de chauffage à eau ou électrique au lieu de le mettre directement sur les PIV avec les problèmes mécaniques dus à la fragilité desdits PIV. Avec une géométrie facilitant la pose du système de chauffage, qui peut être soit de type mini tubes, soit de type micro-capillaires, ou encore tout type intégrant les zones de circulation de fluide au sein même de son épaisseur.

Selon une réalisation possible de la présente invention, la couche thermique comprend un plancher rayonnant électrique permettant d'offrir une fonction chauffante à partir d'une énergie électrique. Un tel plancher rayonnant électrique est connu de l'état de la technique et ne sera pas plus détaillé.

Un plancher chauffant selon une autre réalisation possible de la présente invention est basé sur le principe consistant à installer sur la couche de protection mécanique, isolante à l'humidité 322 un réseau de tuyaux de diamètre d'au moins 12 mm et préférentiellement d'environ 18 mm dans lequel circule un fluide caloporteur (dont la température est réglée de façon à « chauffer » ou « refroidir » selon les utilisations) provenant d'un système thermodynamique (chaudière, pompe à chaleur, ...). Une fois le réseau installé, il est prévu d'enrober ce réseau de tuyaux dans la chape humide à haute performance en la coulant sur le réseau.

Selon une autre réalisation possible de l'invention et en référence à la figure 3, il est prévu de passer d'un concept de « tuyaux » selon l'état de la technique à un concept « nappe » ou « tapis » de tuyaux 33 plus fins de type capillaire préférentiellement d'une épaisseur d'environ 5 mm. Cette technique permet de réduire substantiellement l'épaisseur du réseau d'eau à une épaisseur de 5 mm inclus dans la chape ultra mince, permettant ainsi de réduire d'autant l'épaisseur du plancher, tout en gardant la même distance « d » entre les tuyaux et la surface 342 du plancher. De plus, il est prévu que les tuyaux capillaires présentent une section ovale permettant ainsi de réduire encore l'épaisseur de la couche thermique tout en gardant la même section de passage pour le fluide caloporteur. Dans ce cas l'épaisseur des tuyaux capillaires correspond à leur hauteur.

Selon une réalisation possible de la présente invention, il est prévu que l'alimentation en fluide de la nappe et le retour au système thermodynamique (par exemple une pompe à chaleur) soient réalisés via des tuyaux plus épais d'environ 15 mm qui sont avantageusement agencés en extrémité de la pièce à isoler. Ces tuyaux plus épais peuvent alors être associés à une couche isolante aux pourtours de la pièce dont l'épaisseur est adaptée.

En référence à la figure 5, l'invention concerne également un procédé de mise en oeuvre (par exemple lors d'une rénovation) des planchers isolant comprenant les étapes suivantes :
- fournir une couche isolante comprenant des panneaux sous vide standards (étape 50),
- disposer ladite couche isolante sur une structure porteuse (étape 52),
- disposer une couche de protection mécanique, isolante à l'humidité sur ladite couche isolante (étape 53),
- fournir en outre une couche de transfert thermique disposée sur ladite couche isolante (étape 54) dans le cas où l'on souhaite obtenir un plancher avec fonction thermique,
- disposer par coulage une chape humide à haute performance sur la couche isolante (étape 56).

Selon une réalisation possible de la présente invention, il est également possible de remplacer la chape humide à haute performance par une chape de type sèche (appelée aussi de type « panneaux »). Par opposition à la chape humide coulée sur place, la chape dite sèche peut être aussi à haute performance mais elle est constituée d'éléments préfabriqués (par exemple sous forme de plaques ou panneaux) assemblés sur place.

Une telle chape est associée à un procédé de mise en oeuvre d'un plancher isolant consistant à mettre en place sur la sous couche isolante égalisée un plancher constitué d'un assemblage mécanique d'éléments de grandes dimensions (environs 1200 * 600 mm) préfabriqués à base de plâtre, béton ou autres composants.

Les éléments préfabriqués disposent de systèmes de feuillure garantissant leur assemblage et le non gauchissement de la surface une fois les éléments assemblés. Ces chapes sèches sont souvent installées en deux couches d'éléments croisés d'une épaisseur unitaire d'environ 18 à 23 mm, fixées mécaniquement et jointoyées entre eux.

L'utilisation d'une telle chape dite « sèche » permet de s'abstenir d'un coulage de chape humide à haute performance nécessitant une installation correspondante complexe (bétonneuse, tuyaux de versement, ...).

## Revendications

1. Plancher isolant comprenant au-dessus de la structure porteuse (30):
- une chape humide à haute performance (34),
- une couche isolante (32) agencée sous la chape de béton (34) et comprenant des panneaux sous vide,
**caractérisé en ce que** la couche isolante (32) comprend une couche de protection mécanique, isolante à l'humidité (322).

2. Plancher isolant selon la revendication 1, dans lequel les panneaux sous vide sont de type standard.

3. Plancher isolant selon la revendication 1 ou 2, dans lequel les panneaux sous vide comprennent une âme (40) en silice microporeuse et une enveloppe barrière (42) permettant de maintenir une dépression à l'intérieur de l'enveloppe.

4. Plancher isolant selon l'une des revendications 1 à 3, dans lequel la couche de protection mécanique, isolante à l'humidité (322) comprend en outre des moyens résilients de protection associés à la couche isolante (32) afin de protéger ladite couche isolante.

5. Plancher isolant selon l'une des revendications 1 à 4, lequel comprend en outre des moyens d'isolation acoustique (320) associés à la couche isolante.

6. Plancher isolant selon l'une des revendications 1 à 5, dans lequel la chape (34) comprend une couche de transfert thermique (33).

7. Plancher isolant selon la revendication 6, dans lequel la couche thermique comprend un plancher rayonnant électrique.

8. Plancher isolant selon la revendication 6, dans lequel la couche thermique comprend des moyens de circulation (33) d'un fluide caloporteur.

9. Plancher isolant selon la revendication 8, dans lequel les moyens de circulation comprennent des tuyaux (33) d'une épaisseur d'environ 5mm.

10. Ensemble d'isolation d'une pièce comprenant :
- un plancher isolant selon la revendication 8 ou 9,
- un système thermodynamique relié aux moyens de circulation (33).

11. Procédé de mise en oeuvre d'un plancher isolant comprenant les étapes suivantes :
- fournir une couche isolante comprenant des panneaux sous vide (32),
- disposer ladite couche isolante sur une structure porteuse (30),
- disposer une couche de protection mécanique, isolante à l'humidité (322) sur ladite couche isolante (32),
- disposer par coulage une chape humide à haute performance (34) sur la couche de protection mécanique, isolante à l'humidité sur ladite couche isolante (322).

12. Procédé selon la revendication précédente, lequel comprend:
- fournir en outre une couche de transfert thermique disposée sur ladite couche isolante (322).

13. Plancher isolant comprenant au dessus de la structure porteuse (30):
- une chape à haute performance de type sèche (34),
- une couche isolante (32) agencée sous la chape de béton (34) et comprenant des panneaux sous vide,
**caractérisé en ce que** la couche isolante (32) comprend une couche de protection mécanique, isolante à l'humidité (322).
